(19) **Europäisches Patentamt**

**European Patent Office**

**Office européen des brevets**

(11) Veröffentlichungsnummer : **0 145 832**
**B1**

(12) **EUROPÄISCHE PATENTSCHRIFT**

(45) Veröffentlichungstag der Patentschrift :
08.07.87

(21) Anmeldenummer : 84107646.6

(22) Anmeldetag : 02.07.84

(51) Int. Cl.⁴ : **B 29 C 63/02**, B 29 C 51/16,
B 27 N 5/00, B 27 N 7/00 //
B29L31:30

(54) Verfahren und Vorrichtung zum Herstellen eines kaschierten Formteils.

(30) Priorität : 16.12.83 DE 3345626

(43) Veröffentlichungstag der Anmeldung :
26.06.85 Patentblatt 85/26

(45) Bekanntmachung des Hinweises auf die Patenterteilung : 08.07.87 Patentblatt 87/28

(84) Benannte Vertragsstaaten :
AT BE DE FR GB IT NL SE

(56) Entgegenhaltungen :
DE-A- 3 033 166
US-A- 2 484 656
US-A- 2 510 214
US-A- 3 115 678

(73) Patentinhaber : PLASTIFOL Gmbh & Co KG
Ringstrasse 130
D-8017 Ebersberg (DE)

(72) Erfinder : Kobe, Michael M., Ing. grad.
Krankenhausstrasse 25
D-8090 Wasserburg/Inn (DE)

(74) Vertreter : Patentanwälte Grünecker, Dr. Kinkeldey,
Dr. Stockmair, Dr. Schumann, Jakob, Dr. Bezold,
Meister, Hilgers, Dr. Meyer-Plath
Maximilianstrasse 58
D-8000 München 22 (DE)

**Beschreibung**

Die Erfindung bezieht sich auf ein Verfahren zum Herstellen eines kaschierten Formteils, insbesondere eines Kfz-Innenraumverkleidungsteiles, das einen Träger aufweist, der zum Kaschieren unverformt erhitzt und dann in ein temperiertes Verformungswerkzeug eingeführt wird, wo ihm an der späteren Sichtoberfläche ein Oberflächenmaterial zugeordnet wird, das während des Verformens des Trägers auf diesen aufkaschiert wird.

Ein Verfahren der eben genannten Art ist aus der Praxis bekannt. Der Träger und das Oberflächematerial werden im Verformungswerkzeug zusammengeführt und miteinander verarbeitet. Hierzu kann das Werkzeug je nach Anforderung entweder kalt oder temperiert sein.

Das bekannte Verfahren ist von den Kosten her vorteilhaft, da in einem Arbeitsgang geformt, kaschiert und sogar beschnitten werden kann.

Nachteilig ist dagegen, daß der Träger nur auf seiner gesamten Oberfläche mit einem einheitlichen Oberflächematerial kaschiert werden kann.

Weiterhin ist aus der US-A-3 115 678 ein Verfahren bekannt, bei dem ein bereits mit einer Kaschierung versehenes Verbindungsteil in das Verformungswerkzeug eingelegt und anschließend zusammen mit einem Träger in die gewünschte Form gebracht wird.

Aus der Praxis ist ein anderes, gattungsfremdes Verfahren bekannt, bei dem kaltes Trägermaterial in einem beheizten Verformungswerkzeug geformt und beschnitten wird. Der auf diese Art und Weise vorgeformte Träger wird anschließend mit Kleber eingespritzt und in einem Folgewerkzeug mit Oberflächenmaterial kaschiert. Dabei besteht die Möglichkeit, den Träger in zwei aufeinanderfolgenden Verfahrensschritten mit zwei unterschiedlichen Materialien zu kaschieren, die verschiedene Bereiche der Oberfläche abdecken.

Bei dem auf diese Art und Weise kaschierten Formteil muß noch das überstehende Oberflächenmaterial umgebugt werden. Weiterhin ist es bei dem mit zwei unterschiedlichen Oberflächenmaterialien kaschierten Formteil notwendig, die Verbindungslinie zwischen den verschiedenen Oberflächenbereichen durch eine Deckleiste abzudecken.

Das bekannte Verfahren ist nachteilig, da es vielfältige Verfahrensschritte bedingt, die aus Kostengründen vermieden werden sollen. Aus der DE-A-31 09 338 ist ein ähnlich gattungsfremdes Verfahren bekannt, bei dem zwei Zuschnitte unterschiedlichen Oberflächenmaterials gleichzeitig und nicht wie bisher beschrieben nacheinander auf einen vorgeformten Träger aufgebracht werden. Die Zuschnitte werden hierzu in einem Spannrahmen dem separaten Kaschierwerkzeug zugeführt. Entlang der Verbindungslinie der beiden Zuschnitte wird ein Niederhalter angeordnet, der die Zuschnitte hält. Die Zuschnitte werden anschließend erhitzt und durch Evakuierung des Oberteiles des Kaschierwerkzeuges nach oben gesaugt.

Zum Kaschieren des in der Unterform des Kaschierwerkzeuges bereitgestellten, vorverformten Trägers wird das Oberteil des Kaschierwerkzeuges zusammen mit dem Spannträger so weit abgesenkt, bis das Ober- und Unterteil des Werkzeuges aufeinander zu liegen kommen und der Niederhalter in Berührung gerät mit der Oberfläche des Trägers.

Um das Oberflächenmaterial in Anlage mit dem Träger zu bringen, wird der Raum oberhalb des Oberflächenmaterials gelüftet, so daß das Vakuum zusammenbricht. Dafür wird der Raum unterhalb des Oberflächenmaterials durch den Träger hindurch evakuiert, wodurch sich das Oberflächenmaterial dicht an den Träger anlegt.

Das bekannte Verfahren ist wiederum kompliziert aufgebaut, weil es eine Vielzahl von Verfahrensschritten erforderlich macht. Insbesondere das Evakuieren des Ober- und Unterteiles des Werkzeuges ist kostspielig und erfordert eine spezielle Ausbildung des Werkzeuges. Darüber hinaus ist das bekannte Verfahren nur anwendbar bei einem luftdurchlässigen Werkstoff für den Träger, da ansonsten das Oberflächenmaterial beim eigentlichen Kaschieren nicht an den Träger herangezogen werden kann. Weiterhin ist es unabdingbar, daß das Oberflächenmaterial selbst luftundurchlässig ist, da anders die Wechselwirkung des gegenseitigen Evakuieren des Ober- und Unterteils des Kaschierwerkzeuges wirkungslos wäre.

Der vorliegenden Erfindung liegt die Aufgabe zugrunde, ein Verfahren der eingangs genannten Art zu schaffen, mit dem auf einfache und kostensparende Art und Weise ein Formteil auf wenigstens zwei Bereichen mit unterschiedlichen Oberflächmaterialien kaschiert werden kann.

Diese Aufgabe wird erfindungsgemäß dadurch gelöst, daß das Oberflächenmaterial in Form wenigstens zweier, unterschiedlicher Bereiche des Trägers abdeckender Zuschnitte, im Verformungswerkzeug gespannt gehalten und der Träger mittels von oben und unten klemmender Klemmelemente entlang wenigstens einer Überlappungs- oder Stoß- bzw. Verbindungslinie an die gespannten Zuschnitte angedrückt wird, ehe der Träger zusammen mit den Zuschnitten verformt wird.

Das erfindungsgemäße Verfahren zeigt nur wenige Verformungsschritte, ist kostensparend und bietet dennoch die Möglichkeit, das Formteil an verschiedenen Oberflächenbereichen mit gesondertem Oberflächenmaterial zu kaschieren.

Zunächst ist zu bemerken, daß auch beim erfindungsgemäßen Verfahren in einem Arbeitsgang das Formteil geformt und kaschiert wird. Gleichzeitig ist es noch möglich, es bei diesem einzigen Arbeitsgang auch zu beschneiden.

Das Kaschieren mit unterschiedlichem Oberflächenmaterial wird auf überraschende Art und Weise erreicht, obwohl man auf die aus dem Stand der Technik bekannten Evakuierungseinrichtungen beim Werkzeug gänzlich verzichtet. Besonders vorteilhaft ist die Tatsache, daß man bei der Erfindung nicht auf luftdurchlässiges Trägermaterial bzw. luftundurchlässiges Oberflächenmaterial festgelegt ist. Die Auswahl der möglichen Werkstoffe ist deshalb bei der Erfindung sehr viel größer.

Die Klemmelemente sind eine wirksame Einrichtung, um die Oberflächenzuschnitte entlang der Verbindungslinie auf dem Träger festzulegen und damit bei der anschließenden folgenden Verformung in der gegenseitigen Zuordnung zu sichern. Bei der Erfindung wird im Gegensatz zum Stand der Technik der Träger an die in einer Ebene gespannten Zuschnitte herangeführt, um ihn zunächst entlang der Verbindungslinie an den Zuschnitten festzulegen. Dabei ist wichtig, daß der Träger noch unverformt ist und erst anschließend verformt wird, wenn der Ober- und Unterstempel des Verformungswerkzeuges relativ aufeinander zubewegt werden. Dies bedeutet, daß der Träger erst geformt wird, nachdem die Position der Verbindungslinie der Zuschnitte auf ihm bestimmt ist. Der Träger wird also gleichsam in Abhängigkeit von der Verbindungslinie der Zuschnitte geformt. Die Folge davon ist, daß die Verbindungslinie der Zuschnitte immer exakt am Träger ausgerichtet ist und es nicht wie bei den gattungsfremden Verfahren des Standes der Technik passieren kann, daß die Verbindungslinie beim vorgeformten Träger seitlich versetzt zu liegen kommt.

Bedingt durch die exakte Ausbildung der Verbindungslinie ist es bei der Erfindung auch möglich, trotz Verwendung unterschiedlichen Oberflächenmaterials für die Kaschierung auf eine Deckleiste zu verzichten.

Bei einer vorteilhaften Weiterbildung der Erfindung ist vorgesehen, daß der Träger mit den Zuschnitten entlang der Überlappungs-, Stoß- bzw. Verbindungslinie verbunden wird, ehe er verformt wird. Bei diesem Verfahrensschritt legt man die Zuschnitte nicht nur am Träger fest, sondern sorgt auch für eine erste Verbindung zwischen diesen Teilen.

Eine andere vorteilhafte Weiterbildung der Erfindung besteht darin, daß die Zuschnitte als Bahnmaterial gespannt dem Verformungswerkzeug zugeführt werden. Der Begriff « Zuschnitte » ist weit auszulegen. Es wird damit jegliches für eine Oberflächenkaschierung verwendbare Material angesprochen, gleichgültig, ob es sich dabei um echte Zuschnitte mit definierter Fläche oder um Bahnmaterial mit endloser Fläche handelt. Benutzt man das besagte Bahnmaterial, so ist zumindest darauf zu achten, daß das die Überlappungs-, Stoß- oder Verbindungslinie bestimmende Material längs dieser Linie eine saubere Schnittkante aufweist.

Die Zuführung als Bahnmaterial in gespanntem Zustand ermöglicht die Fabrikation von der Rolle und senkt die Herstellungskosten.

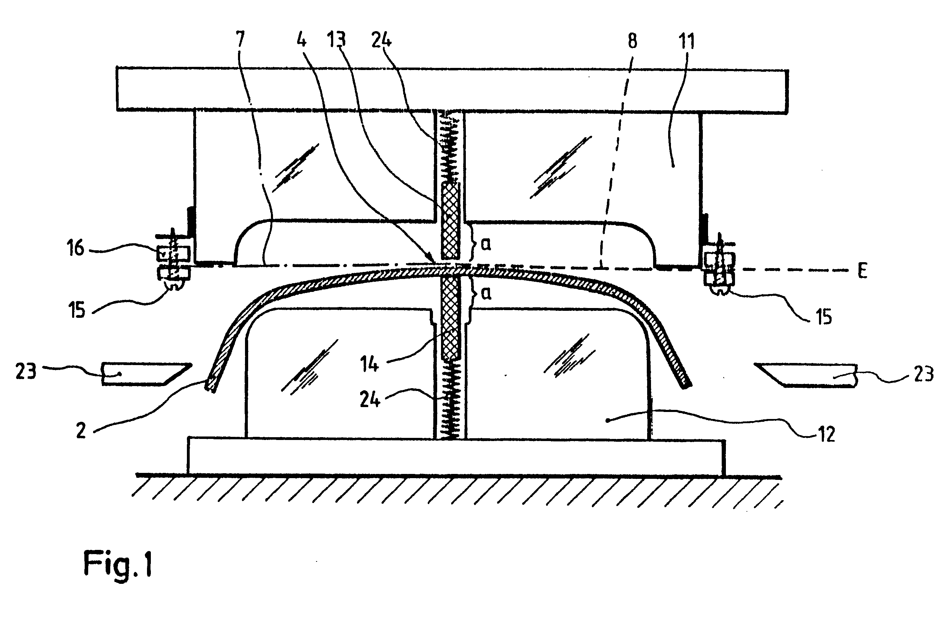

Die Erfindung stellt auch eine Vorrichtung zur Verfügung, um Formteile der eingangs genannten Art herzustellen. Diese Vorrichtung ist dadurch gekennzeichnet, daß im Ober- und Unterstempel einander entgegengerichtet je ein Klemmelement für das aus wenigstens zwei Zuschnitten gebildete Oberflächenmaterial angeordnet ist, die in Klemmposition (siehe Figur 1) gegenüber dem entsprechenden Stempel herausragend angeordnet und in diesen gegen die Kraft eines Widerstandselementes versenkbar gelagert sind.

Die vor dem Verformungsvorgang herausragenden Klemmelemente dienen dazu, das gespannte Oberflächenmaterial auf dem Träger festzulegen, ehe dieser zusammen mit den Zuschnitten verformt wird. Beim Verformen können die Klemmelemente gegen eine Widerstandskraft, beispielsweise gegen die Kraft einer Feder, in den jeweiligen Stempel zurückfahren, um die Verformungsbewegung zu ermöglichen. Die Widerstandskraft kann so gewählt werden, daß bereits beim Festlegen der Zuschnitte auf dem Träger für diesen Teilbereich die notwendige Anpresskraft zur Verfügung steht. Sie kann aber auch so gesteuert werden, daß erst zum eigentlichen Verformungszeitpunkt, beispielsweise durch eine Begrenzung der Versenkbewegung der Klemmelemente der notwendige Verbindungsdruck aufgebracht wird. Auch eine Zwischenlösung ist denkbar.

Im Hinblick auf eine einfache Ausbildung des Verformungswerkzeuges ist es vorteilhaft, wenn der Oberstempel mit einer Spanneinrichtung zum Spannen der Oberflächenzuschnitte in einer Ebene versehen ist, bis zu welcher das diesem Stempel zugeordnete Klemmelement in seiner Greifposition maximal herausragt.

Ausführungsbeispiele der Erfindung sind nachfolgend anhand einer Zeichnung beschrieben. Es zeigen :

Figur 1 eine Schnittansicht durch eine Vorrichtung zum Herstellen eines kaschierten Formteils mit geöffneten Ober- und Unterstempel,

Figur 2 eine Draufsicht auf ein Formteil, das an der Oberfläche mit zwei separaten Oberflächenmaterialien kaschiert ist,

Figur 3 der Schnitt durch das Formteil von Fig. 2 gemäß Linie III-III,

Figuren 4 und 5 Draufsicht auf weitere Formteile, die an ihrer Oberfläche mehr als zwei unterschiedliche Zuschnitte aufweisen bzw. bei denen die Trennungslinie zwischen den Zuschnitten nicht ausschließlich in einer Geraden verläuft,

Figur 6 eine schematische Draufsicht auf die Vorrichtung von Figur 1,

Figur 7 eine schematische Draufsicht auf eine zweite Ausführungsform der erfindungsgemäßen Vorrichtung, bei der das Oberflächenmaterial aus zwei längs der gemeinsamen Verbindungslinie miteinander verbundenen Zuschnittsbahnen besteht,

Figur 8 eine schematische Draufsicht auf eine weitere Ausführungsform der erfindungsgemäßen Vorrichtung, die als Oberflächenmaterial zwei separate Zuschnittbahnen verarbeitet und

Figur 9 eine schematische Schnittansicht einer weiteren Ausführungsform, bei der die Klemmelemente jeweils durch voreilende Leisten ergänzt sind.

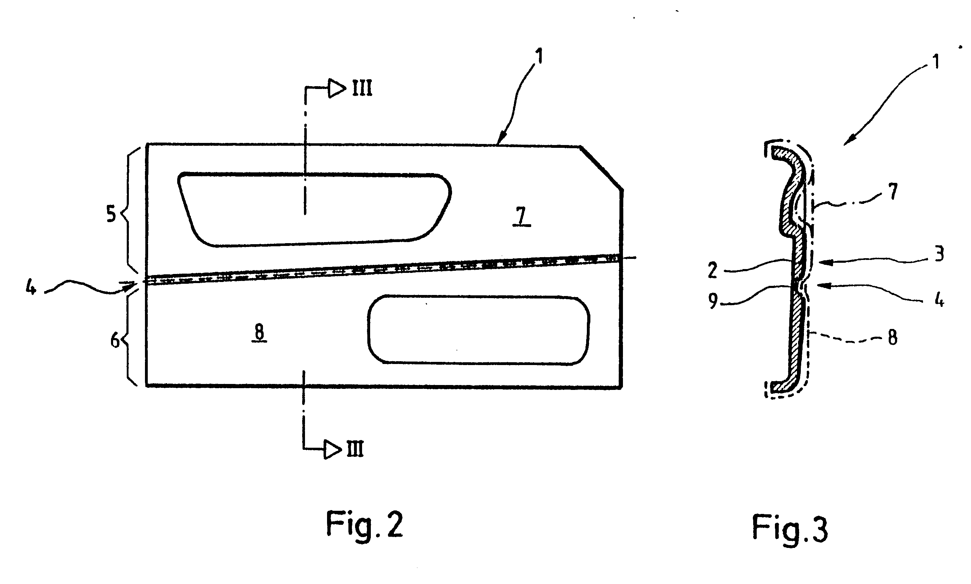

Die dargestellten Vorrichtungen dienen jeweils zum Herstellen eines kaschierten Formteils 1, insbesondere eines Kfz-Innenraumverkleidungsteiles, wie es in den Figuren 2 bis 5 dargestellt ist. Das Formteil weist jeweils einen Träger 2 auf, der im vorliegenden Fall aus Holzmehl gefüllten Polypropylen besteht. Er wird an der späteren sichtbaren Oberfläche mit Oberflächenmaterial 3 kaschiert. Im Falle der Erfindung wird die zur Verfügung stehende Oberfläche aufgeteilt in wenigstens zwei Bereiche, die durch eine Überlappungs- oder Stoß- bzw. Verbindungslinie 4 voneinander getrennt sind. Bei dem Formteil von Figur 2 existieren nur zwei derartige Bereiche, nämlich 5 und 6, wobei dem Bereich 5 ein erster Zuschnitt 7 und dem Bereich 6 ein zweiter Zuschnitt 8 zugeordnet ist. Beide erstrecken sich über die gesamte Länge des Formteiles, jedoch nur über ungefähr die Hälfte der Höhe desselben. Im Bereich der Verbindungslinie 4 überlappt der Zuschnitt 8 den Zuschnitt 7. Dort ist exakt im Verlauf der Verbindungslinie 4 eine im Querschnitt U-förmige Vertiefung 9 des Trägers vorgesehen.

Zur Verdeutlichung des unterschiedlichen Werkstoffcharakters des Zuschnitts 7 vom Zuschnitt 8 ist der erste Zuschnitt in Figur 3 strichpunktiert dargestellt, während der zweite Zuschnitt 8 gestrichelt geschnitten ist.

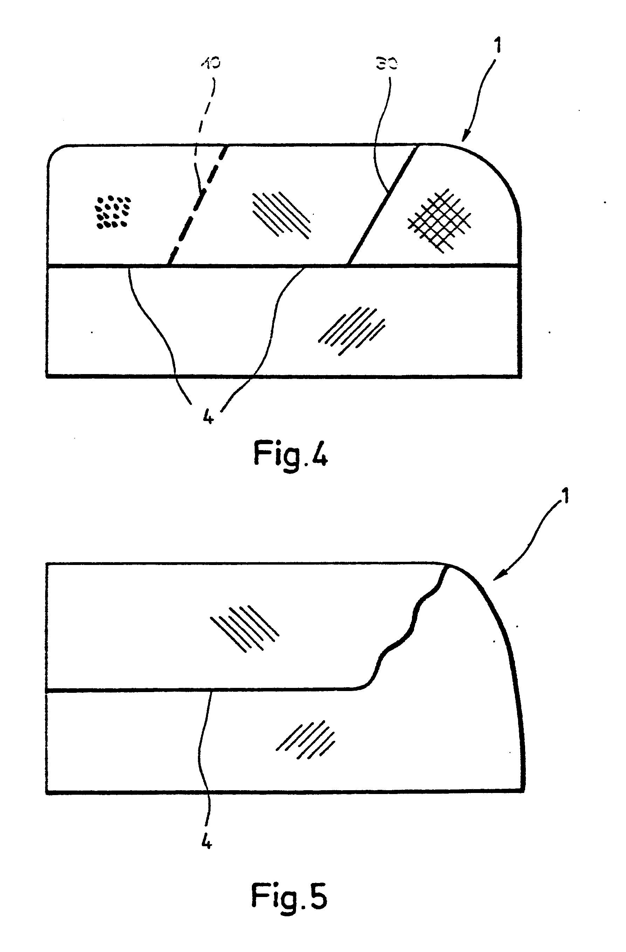

In Figur 4 weist das Formteil 1 drei bzw. bei Berücksichtigung der auf Wunsch zusätzlichen Verbindungselemente sogar vier unterschiedliche Bereiche auf, die jeweils mit verschiedenen Oberflächenmaterialien kaschiert sind. Auch diese Bereiche sind jeweils durch Verbindungslinien voneinander getrennt. Die Unterschiede in der Struktur des Oberflächenmaterials sind durch unterschiedliche Markierungen angedeutet. Von der horizontalen geraden Verbindungslinie 4 zweigen die beiden anderen Verbindungslinie 30 bzw. 10 unter einem Winkel von ca. 60° ab.

Bei der Ausführungsform von Figur 5 besitzt das Formteil 1 analog zu der Ausführungsform von Figur 2 zwei unterschiedliche Bereiche, die jedoch durch eine zum Teil gekrümmte Verbindungslinie 4 voneinander abgesetzt sind.

Figur 1 zeigt einen Querschnitt durch eine erfindungsgemäße Vorrichtung zum Herstellen eines kaschierten Formteils 1. Die Vorrichtung besitzt einen vertikal beweglichen Oberstempel 11, dem ein ortsfester Unterstempel 12 zugeordnet ist. Der Oberstempel besitzt im vorliegenden Fall eine Formvertiefung, die in ihrer Gestalt der Formerhöhung des Unterstempels angepaßt ist. An der Stelle der Form, an der die Verbindungslinie 4 vorgesehen ist, weist sowohl der Ober- als auch der Unterstempel leistenförmige Klemmelemente 13 bzw. 14 auf, die in den Stempeln gegen die Kraft von Federn 24 versenkt angeordnet sind. Die Klemmelemente bestimmen mit ihren einander zugeordneten Klemmflächen die Oberflächenform der Verbindungslinie.

Im vorliegenden Fall ist am Oberstempel 11 mit Hilfe von bekannten Befestigungsmitteln, wie Schrauben 15, ein Spannrahmen 16 befestigt, der dazu dient, die Zuschnitte 7, 8 innerhalb der gezeigten Vorrichtung gespannt zu halten. Der Spannrahmen weist eine größere Grundfläche auf als das Formteil 1 und umgibt im vorliegenden Fall den Oberstempel 11 von allen vier Seiten. Wichtig ist es, daß die Zuschnitte in Richtung der Verbindungslinie 4 gespannt sind, um in diesem Bereich eine exakte Ausrichtung der Zuschnitte zu erzielen. Zusätzlich können sie auch noch quer zur Verbindungslinie 4 gespannt werden, wenn gewährleistet ist, daß hierdurch der exakte Linienverlauf bei der Verbindungslinie nicht gestört wird.

Die beiden Zuschnitte 7 und 8 sind, wie Figur 1 zeigt, praktisch in einer Ebene E gespannt und überlappen sich entlang der Verbindungslinie im vorliegenden Fall auf eine Tiefe von ca. 5 mm. Bei der in Figur 1 dargestellten Vorrichtung liegt die Spannebene E an der Unterseite des Oberstempels 11 an.

Das leistenförmige Klemmelement 14 des Unterstempels 12 ist dem Klemmelement 13 entgegengerichtet angeordnet, so daß die jeweiligen Klemmflächen miteinander einen festen Klemmgriff bewirken können, dessen Stärke durch Bemaßung der entsprechenden Federn 24 eingestellt werden kann. Dabei ist es möglich bei der in Figur 1 dargestellten Greifposition den Klemmgriff entweder nur zum Festlegen des Trägers auf den Zuschnitten zu verwenden, oder in dieser Position bereits diese Teile miteinander körperlich zu verbinden, z. B. mittels HF-Schweißung. Wenn in der Greifposition von Figur 1 die Klemmelemente 13 und 14 die Teile lediglich festlegen, so sind die Federn so zu bemessen, daß spätestens beim Verformungshub die körperliche Verbindung erfolgt.

Das Klemmelement 13 ragt in der Greifposition von Figur 1 so weit heraus, daß die eigentliche Klemmfläche sich nahe oder in der Ebene der Unterseite des Oberstempels befindet. Diese liegt unmittelbar parallel zu der Spannebene E des Spannrahmens 16.

Das Klemmelement 14 ragt ungefähr um den gleichen Betrag a von der Oberfläche des Unterstempels 12 heraus, wie dies beim Klemmelement 13 auch der Fall ist.

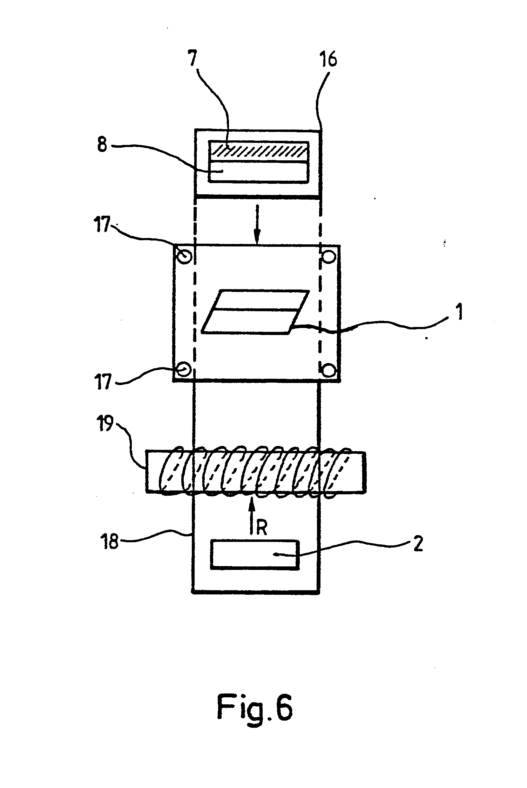

In Figur 6 der Zeichnung ist die Vorrichtung von Figur 1 in der Draufsicht am Arbeitsplatz gezeigt. Es ist zu erkennen, daß die Vorrichtung als 4-Säulen-Presse ausgebildet ist, wobei die Säulen 17 jeweils in den Eckpunkten des rechteckigen Grundrisses angeordnet sind.

An der unteren längeren Rechteckseite der Darstellung ist ein Zuführband 18 für den Rohling des Trägers 2 zu erkennen. Der Pfeil R gibt die auf die Presse hinführende Förderrichtung an. Das Trägermaterial durchläuft vor der Presse eine Heizstation 19, in der der zunächst kalte Träger aufgeheizt wird. Von dort aus wird der Träger dem Verformungswerkzeug zugeleitet. In der Darstellung von oben wird dagegen der Spannrahmen 16 eingeführt, der im vorliegenden Fall analog zur Formteilausführung der Figur 3 zwei Zuschnitte 7 und 8 aufweist.

Bei der Durchführung des erfindungsgemäßen Verfahrens werden zunächst in den Spannrahmen 16 zwei oder mehr Zuschnitte in der gewünschten Anordnung eingespannt. Der Rahmen wird anschließend in einer Bereitschaftsstellung, bei der der Oberstempel 11 relativ weit vom Unterstempel 12 abgehoben ist, an den Oberstempel 11 so befestigt, daß die in der Spannebene E gespannten Zuschnitte an der Unterseite des Oberstempels 11 bzw. nahe an der Klemmfläche des Klemmelementes 13 zu liegen kommen. Der Spannrahmen ist in seiner Lage innerhalb der Ebene E verschieden anordbar, ebenso wie seine Spannkraft verschieden einstellbar ist. Bei gewissen Zuschnittswerkstoffen bzw. Formen des Trägers kann es vorteilhaft sein, zum Erreichen einer geraden Verbindungslinie beim fertigen Formteil die Verbindungslinie beim im Spannrahmen gespannten Oberflächenmaterial zu krümmen, um die Veränderungen der Linienführung beim Verformen zu kompensieren.

Vom Förderband 18 wird ein in der Heizstation 19 bereits aufgeheizter Träger in das sich noch in der Bereitschaftsstellung befindliche Formwerkzeug eingefahren und auf dem Unterstempel 12 abgelegt. Das Formwerkzeug kann je nach Wunsch kalt oder temperiert sein. Das Klemmelement 14 kann sich für das Auflegen des Trägers bereits in der in Figur 1 dargestellten ausgefahrenen Position befinden oder auch noch versenkt sein. Im zweiten Fall muß es dann später nach oben um die Höhe a ausgefahren werden, wenn sich nämlich der Ober- und Unterstempel 11 und 12 in die in Figur 1 dargestellte Greiferposition aufeinander zubewegen.

Bei dieser Stellung wird zunächst der Träger ausschließlich im Bereich der Verbindungslinie 4 an die Zuschnitte 7 und 8 herangeführt und entweder nur auf diesen festgelegt oder sogar jetzt schon mit diesen körperlich durch Aufkaschieren verbunden. Soweit gewünscht, können die einander zugeordneten Klemmflächen der Klemmelemente 13 und 14 mit einem Muster versehen sein, um dieses Muster der Verbindungslinie aufzuprägen oder ggf. die Haftreibung zu erhöhen.

Wenn der Träger an den gespannten Zuschnitten festgelegt oder mit ihnen im Bereich der Verbindungslinie körperlich verbunden ist, erfolgt der Verformungshub, bei dem im vorliegenden Fall der Oberstempel sich zusammen mit dem Spannrahmen nach unten absenkt. Die Klemmelemente 13 und 14 fahren mit fortschreiten- dem Verformungshub jeweils in ihren Führungen zurück, so daß sie gegenüber der benachbarten Stempeloberfläche zunehmend geringer herausragen. Der Oberstempel 11 senkt sich so weit auf den Unterstempel 12 ab, bis er in seine Endposition gerät, bei der der Träger zusammen mit den Zuschnitten die endgültige Form einnimmt und die Zuschnitte, bedingt durch den Verformungsdruck, auf den Träger aufkaschiert sind. Da der Träger bereits im Bereich der Verbindungslinie 4 mit den Zuschnitten fixiert ist ehe die Verformung beginnt, ist sichergestellt, daß die durch die Klemmelemente 13 und 14 vorgegebene Form der Verbindungslinie auch exakt eingehalten wird. Sie befindet sich im gezeigten Fall am Grunde der Nut 9, die bei dem Formteil 3 gleichsam als Schattennut ausgebildet ist. Da, anders als bei den eingangs zitierten gattungsfremden Verfahren, der Träger erst geformt wird, nachdem die Zuschnitte zueinander und auf dem Träger fixiert sind, kommt die Verbindungslinie auch exakt am Grund der Nut 9 zu liegen. Sie ist auch auf Wunsch so geradlinig ausgerichtet, daß auf eine eigene Deckleiste zum Überdecken der Verbindungslinie verzichtet werden kann. Zum Abschluß der Verformung fährt der Oberstempel 11 wieder in die relativ weit geöffnete Bereitschaftsstellung nach oben und gibt das fertige Formteil 1 zur Entnahme frei. Dabei kann das Klemmelement 14 als Ausstoßer dienen.

In Figur 4 ist ein Träger gezeigt, der nicht nur mit zwei, sondern mit drei bzw. vier Zuschnitten belegt ist. Für diese Fertigung ist vorgesehen, die Zuschnitte vor dem Kaschieren miteinander zu verbinden, beispielsweise durch Nähen, Schweißen, Kleben oder ähnliches. Anschließend können die Zuschnitte in der üblichen Art und Weise in einen Spannrahmen eingebracht und verarbeitet werden, wie dies vorstehend geschildert wurde.

Das Gleiche gilt für das Formteil der Figur 5, bei dem zwei verschiedene Zuschnitte über eine gerade und eine Wellenlinie miteinander verbunden sind.

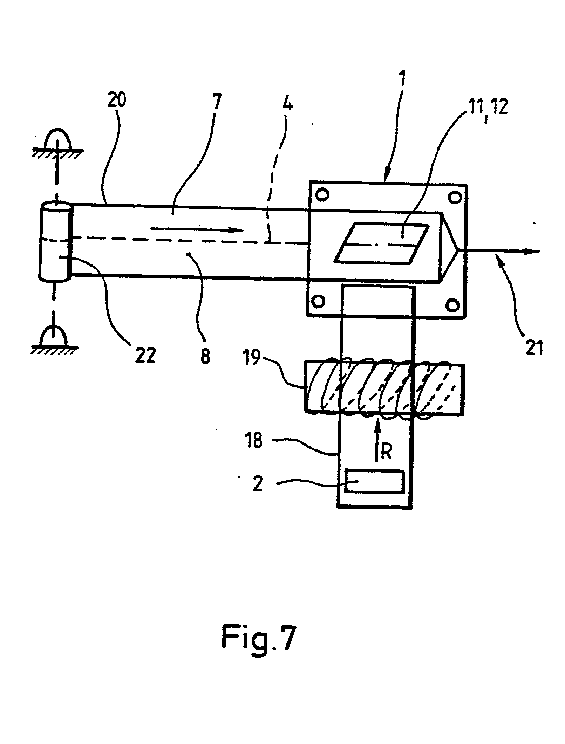

Das Verarbeiten aller vorgenannten Zuschnitte ist allerdings nicht nur mit Hilfe eines Spannrahmens möglich, sondern auch kontinuierlich von der Rolle. Die Figur 7 zeigt in der Draufsicht eine 4-Säulen-Presse, wie sie bereits von Figur 6 her bekannt ist. Auch die Zuführung für das Trägermaterial ist unverändert, weshalb hierauf nicht weiter eingegangen werden soll.

Neu ist dagegen die Zuführung für die Zuschnitte 7 und 8, die im vorliegenden Fall von der Rolle erfolgt. Die Zuschnitte sind entlang der gemeinsamen, parallel zur Längserstreckung des aufgerollten Zuschnittbandes 20 miteinander vernäht oder bereits bei der Herstellung des Oberflächenmaterials schon dementsprechend berücksichtigt worden. Die Rolle ist lösbar so ortsfest gelagert, daß das Zuschnittband 20, im vorliegenden Fall im rechten Winkel zur Zuführrichtung R, in die Säulenpresse hereingeführt ist. Eine schematisch dargestellte Spanneinrichtung 21 hält das Zuschnittband 20 in Richtung der Längserstreckung des Bandes auf Spannung. Die Rolle 22 ist in den Lagern gebremst, um die Spannung zu ermöglichen.

Das Zuschnittband 20 ermöglicht die ununterbrochene, schrittweise Zufuhr der Zuschnitte. Um die Spannung während der Bearbeitung aufrechtzuerhalten, ist entweder vorgesehen, das Zuschnittband breiter zu machen als dies tatsächlich zum Kaschieren des Formteils 1 notwendig ist.

Auf diese Art und Weise bleiben Randstreifen stehen, die wiederum aufgewickelt werden können und die Zugkraft auf das noch nicht verarbeitete Zuschnittband übertragen. Sollte dagegen das Zuschnittband nur in etwas so breit ausgeführt werden, wie dies zum kaschieren des Formteils notwendig ist, so ist die Spanneinrichtung 21 so einzurichten, daß sie nach jedem Kaschiervorgang neu mit dem zur Verarbeitung anstehenden Teil des Zuschnittbandes 20 verknüpft wird.

Bei sämtlichen in der Zeichnung dargestellten Vorrichtungen können Trennelemente 23 (siehe Figur 1) vorgesehen werden, um nach dem Verformungshub überstehende Teile der Zuschnitte und/oder des Trägers abzutrennen und ggf. gleichzeitig die entstehende Körperkante umzubugen.

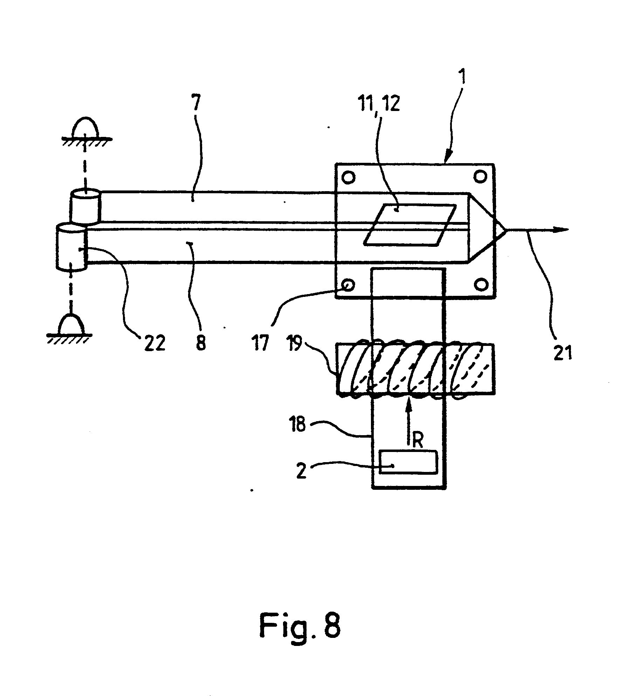

Die Vorrichtung 1 der Figur 8 ist im Prinzip ähnlich aufgebaut wie diejenige der Figur 7, weshalb nur noch auf die Unterschiede eingegangen werden soll. Gleiche Teile sind mit gleichen Bezugszeichen versehen.

Der wichtige Unterschied zwischen den gerade angesprochenen Vorrichtungen besteht in der Zuführung der Zuschnitte 7 und 8, die im vorliegenden Fall zwar ebenfalls von der Rolle 22 abgespult werden, aber körperlich miteinander noch nicht verbunden sind. Sie werden überlappend der Vorrichtung 1 zugeführt und in analoger Weise verarbeitet, wie dies bereits im Zusammenhang mit der Vorrichtung der Figuren 1 und 6 bzw. derjenigen der Figur 7 beschrieben worden ist.

Generell kann bemerkt werden, daß bei der Zuschnittzuführung der Figur 8 die Zuschnitte 7 und 8 entweder bereits überlappend auf der Rolle 22 gelagert sein können oder die Überlappung durch Führungselemente erreicht wird, die zwischen der Rolle 22 und der Vorrichtung 1 angeordnet sind.

Weiterhin darf festgehalten werden, daß bei sämtlichen gezeigten Vorrichtungen die Möglichkeit besteht, die Zuschnitte im Bereich der Verbindungslinie entweder überlappen zu lassen, oder sie auf Stoß anzuordnen, oder sie bereits vor der Bearbeitung körperlich miteinander zu verbinden. Bei der letzten Art der Anordnung können die Zuschnitte im Bereich der Verbindungskante auch aufeinander zurückgebogen sein. Natürlich besteht auch die Möglichkeit, im Bereich der Verbindungslinie zwischen den Zuschnitten auf Wunsch einen Zwischenraum zu belassen, so daß dort der Träger zum Vorschein kommt.

Bei der Erfindung besteht jeweils die Möglichkeit, die Zuschnitte längs der Verbindungslinie vor dem Einlegen in den Spannrahmen, nach dem Einlegen, jedoch vor dem Verformen und gleichzeitig mit dem Verformen miteinander zu verbinden.

Die Klemmelemente können hierzu beispielsweise als Hochfrequenz-Elektroden ausgebildet sein.

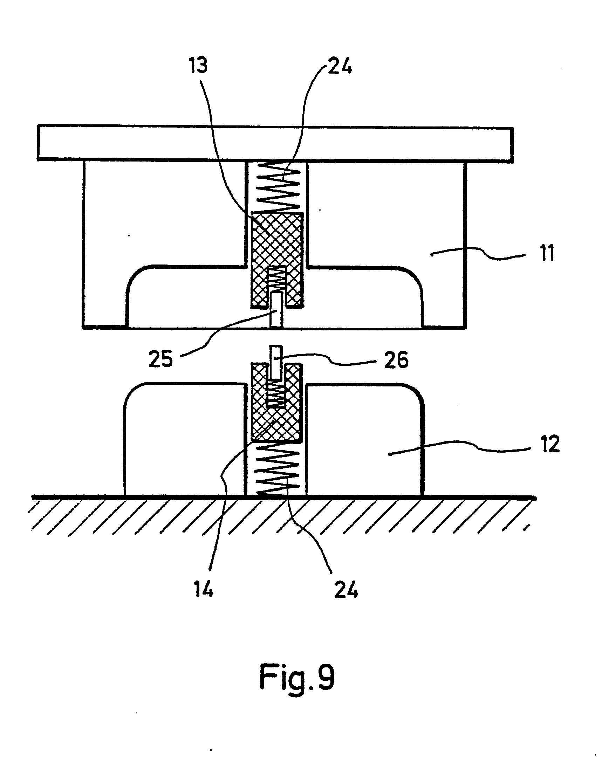

Die Ausführungsform der Figur 9 entspricht im wesentlichen derjenigen der Figur 1. Gleiche Teile sind mit gleichen identischen Bezugszeichen versehen. Nachfolgend wird nur noch auf die unterschiedlichen Merkmale eingegangen.

Die Klemmelemente 13, 14 weisen jeweils in Leistenrichtung selbständig voreilende Leisten 25 bzw. 26 auf, die von ihrer Funktion her den Greiferelementen 13 und 14 entsprechen. Sie sind jeweils in den Klemmelementen so federnd gelagert, daß sie in der in Figur 9 gezeigten Bereitschaftsstellung des Werkzeuges über die dem Werkstück zugeordnete Oberfläche der Klemmelemente in Richtung der Werkzeugmitte vorragen. Diese zusätzlichen Leisten dienen dazu, bei in stark verformten Werkstückbereichen vorgesehenen Materialtrennlinien eine frühzeitige und genaue Fixierung zu erreichen.

Die Leisten 25, 26 erstrecken sich üblicherweise über die Länge der Greiferelemente 13, 14. Sie können aber auch kürzer sein.

Bei den gezeigten Ausführungsbeispielen sind die Klemmelemente 13, 14 und die Leisten 25, 26 mit Hilfe von Federn zustellbar angeordnet. Statt der Federn können aber auch Stelleinrichtungen verwendet werden, mit Hilfe derer die Klemmelemente und Leisten auf Wunsch im Zustellsinn betätigbar sind.

## Patentansprüche

1. Verfahren zum Herstellen eines kaschierten Formteiles, insbesondere eines Kfz-Innenraumverkleidungsteiles, das einen Träger (2) aufweist, der zum Kaschieren unverformt erhitzt und dann in ein temperiertes Verformungswerkzeug eingeführt wird, wo ihm an der späteren Sichtoberfläche ein Oberflächenmaterial (3) zugeordnet wird, das während des Verformens des Träges auf diesen aufkaschiert wird, dadurch gekennzeichnet, daß das Oberflächenmaterial in Form wenigstens zweier, unterschiedliche Bereiche des Trägers abdeckender Zuschnitte (7, 8) im Verformungswerkzeug gespannt gehalten und der Träger mittels von oben und unten klemmender Klemmelemente (13, 14) entlang wenigstens einer Überlappungs- oder Stoß- bzw. Verbindungslinie (14) an die gespannten Zuschnitte (7, 8) angedrückt wird, ehe der Träger (2) zusammen mit den Zuschnitten verformt wird.

2. Verfahren nach Anspruch 1, dadurch gekennzeichnet, daß der Träger (2) mit den Zuschnitten (7, 8) entlang der Überlappungs- oder Stoß- bzw. Verbindungslinie (4) verbunden wird, ehe er verformt wird.

3. Verfahren nach Anspruch 1 oder 2, dadurch gekennzeichnet, daß die Zuschnitte (7, 8) als Bahnmaterial gespannt dem Verformungswerkzeug zugeführt werden.

4. Vorrichtung zum Herstellen eines mit Oberflächenmaterial kaschierten Formteils (1), insbesondere eines Kfz-Innenraumverkleidungsteils, das einen Träger (2) aufweist, mit einem einen Ober- und Unterstempel (11, 12) aufweisenden Verformungswerkzeug, nach einem der vorhergehenden Ansprüche, dadurch gekennzeichnet, daß im Ober- und Unterstempel (11, 12) einander entgegengerichtet je ein Klemmelement (13, 14) für das aus wenigstens zwei Zuschnitten (7, 8) gebildete Oberflächenmaterial angeordnet ist, die in Klemmposition gegenüber dem entsprechenden Stempel (11, 12) herausragend angeordnet und in diesen gegen die Kraft eines Widerstandselements (24) versenkbar gelagert sind.

5. Vorrichtung nach Anspruch 4, dadurch gekennzeichnet, daß der Oberstempel (11) mit einer Spanneinrichtung (16) zum Spannen der Zuschnitte in einer Ebene (E) versehen ist, bis zu welcher das Klemmelement (13) in seiner Klemmposition maximal herausragt.

## Claims

1. Process for producing a laminated moulding, especially a motor-vehicle interior trim article, which has a carrier (2) which is heated unformed for lamination and which is then introduced into a forming tool, set at a particular temperature, where a surface material (3) is assigned to it on the subsequent visible surface and is laminated onto the carrier during the forming of the latter, characterized in that the surface material, in the form of at least two blanks (7, 8) covering different regions of the carrier, is held tensioned in the forming tool, and the carrier, is held tensioned in the forming tool, and the carrier is pressed against the tensioned blanks (7, 8) along at least one overlap line or butting or joining line (4) by means of clamping elements (13, 14) exerting a clamping effect from above and below, before the carrier (2) is formed together with the blanks.

2. Process according to Claim 1, characterized in that the carrier (2) is joined to the blanks (7, 8) along the overlap line or butting or joining line (4), before it is formed.

3. Process according to Claim 1 or 2, characterized in that the blanks (7, 8) are delivered tensioned as sheet material to the forming tool.

4. Apparatus for producing a moulding (1) laminated with surface material, especially a motor-vehicle interior trim article, which has a carrier (2), with a forming tool having an upper and a lower die (11, 12), according to one of the preceding claims, characterized in that the upper and the lower die (11, 12) each contain, pointed in opposite directions to one another, a clamping element (13, 14) for the surface material composed of at least two blanks (7, 8), and in the clamping position the said clamping elements (13, 14) are arranged so as to project relative to the corresponding dies (11, 12) and are mounted so as to be retractable in these, counter to the force of a resistance element (24).

5. Apparatus according to claim 4, characterized in that the upper die (11) is equipped with a tensioning device (16) for tensioning the blanks in a plane (E), up to which the clamping element (13) projects at its maximum extent in its clamping position.

## Revendications

1. Procédé de fabrication d'un préformé doublé, en particulier d'une pièce de revêtement intérieure pour véhicules automobiles, comportant un support (2), lequel est chauffé sans déformation pour le doublage et est ensuite introduit dans un outil de formage à température équilibrée où on lui applique, sur sa face ultérieurement visible, un matériau de surface (3) qui est contre-collé sur celui-ci pendant son formage, caractérisé par le fait que le matériau de surface, se présentant sous la forme d'au moins deux découpes (7, 8) recouvrant des zones différentes du support, est maintenu tendu dans l'outil de formage et que le support, à l'aide d'éléments de serrage (13, 14) l'enserrant par en dessus et par en dessous, est pressé contre les découpes (7, 8) tendues le long au moins d'une ligne de chevauchement, de joint ou de raccordement (4) avant d'être lui-même formé en même temps que lesdites découpes.

2. Procédé selon la revendication 1, caractérisé par le fait que le support (2) est relié aux découpes (7, 8) le long de la ligne de chevauchement, de joint ou de raccordement (4) avant d'être formé.

3. Procédé selon la revendication 1 ou 2, caractérisé par le fait que les découpes (7, 8) sont amenées à l'outil de formage tendues sous forme de matériau en bande.

4. Dispositif pour la fabrication d'un préformé (1) doublé d'un matériau de surface, en particulier d'une pièce de revêtement intérieure pour véhicules automobiles, comportant un support selon l'une des revendications précédentes, lequel dispositif est muni d'un outil de formage possédant un poinçon supérieur (11) et un poinçon inférieur (12), caractérisé par le fait que dans le poinçon supérieur (11) et le poinçon inférieur (12) sont respectivement logés les éléments de serrage (13, 14) disposés en sens contraire pour le matériau de surface constitué d'au moins deux découpes (7, 8), ces éléments de serrage, en position de serrage, faisant saillie en dehors de leurs poinçons respectifs (11, 12) dans lesquels ils sont montés de façon à pouvoir y être enfoncés à l'encontre de la force d'un élément de résistance (24).

5. Dispositif selon la revendication 4, caractérisé par le fait que le poinçon supérieur (11) est doté d'un dispositif tendeur (16) servant à tendre les découpes dans un plan (E) jusqu'auquel l'élément de serrage (13) peut faire saillie lorsqu'il se trouve à sa position de serrage maximale.

**Fig.1**

0 145 832

Fig.2

Fig.3

0 145 832

Fig.4

Fig.5

Fig. 6

Fig.7

Fig. 8

Fig.9